# EUROPÄISCHE PATENTSCHRIFT

(11) **EP 3 956 736 B1**
(45) Veröffentlichungstag und Bekanntmachung des Hinweises auf die Patenterteilung: **28.01.2026**
(21) Anmeldenummer: 20719624.7
(22) Anmeldetag: 16.04.2020
(51) Int. Cl.: G05B 19/4099, G05B 23/02, G06T 7/00

(54) **COMPUTER-IMPLEMENTIERTES VERFAHREN ZUR BESTIMMUNG VON DEFEKTEN EINES MITTELS EINES ADDITIVEN FERTIGUNGSPROZESSES HERGESTELLTEN OBJEKTS**
COMPUTER-IMPLEMENTED METHOD FOR DETERMINING DEFECTS OF AN OBJECT PRODUCED USING AN ADDITIVE MANUFACTURING PROCESS
PROCÉDÉ MIS EN OEUVRE PAR ORDINATEUR POUR LA DÉTERMINATION DE DÉFAUTS D'UN OBJET FABRIQUÉ AU MOYEN D'UN PROCESSUS DE FABRICATION ADDITIVE

(30) Priorität: 18.04.2019 DE 102019110360
(43) Veröffentlichungstag der Anmeldung: 23.02.2022
(73) Patentinhaber: Volume Graphics GmbH, 69115 Heidelberg (DE)
(72) Erfinder: SCHWADERER, Gerd, 69115 Heidelberg (DE); GÜNTHER, Thomas, 69115 Heidelberg (DE); FIERES, Johannes, 69115 Heidelberg (DE); FLEßNER, Matthias, 69115 Heidelberg (DE)
(74) Vertreter: Patentanwälte Olbricht Buchhold Keulertz
(86) Internationale Anmeldenummer: PCT/EP2020/060708
(87) Internationale Veröffentlichungsnummer: WO 2020/212489

(56) Entgegenhaltungen:
- WO-A1-2018/217903
- US-A1- 2017 032 281
- KÉVIN GARANGER ET AL: "Foundations of Intelligent Additive Manufacturing", ARXIV PREPRINT, 12 May 2017 (2017-05-12), pages 1 - 9, XP055552092
- PURTONEN TUOMAS ET AL: "Monitoring and Adaptive Control of Laser Processes", PHYSICS PROCEDIA, ELSEVIER, AMSTERDAM, NL, vol. 56, 9 September 2014 (2014-09-09), pages 1218 - 1231, XP029053133, ISSN: 1875-3892, DOI: 10.1016/J.PHPRO.2014.08.038

## Beschreibung

Die Erfindung betrifft ein computer-implementiertes Verfahren (Anspruch 1) und ein Computerprogrammprodukt (Anspruch 13) zur Bestimmung von Defekten eines mittels eines additiven Fertigungsprozesses hergestellten Objekts, wobei während des additiven Fertigungsprozesses Volumenelemente oder räumliche Koordinaten des herzustellenden Objekts bearbeitet werden.

Bei der additiven bzw. generativen Herstellung eines Objekts erfolgt ein meist schichtweiser Aufbau des Objekts, beispielsweise auf einem Substrat. Es sind mehrere Prozesse bekannt, mit dem dies möglich ist. Diese umfassen unter anderem das selektive Laser-Aufschmelzverfahren ("Selective Laser Melting", SLM), das Elektronenstrahl-Aufschmelzverfahren ("Electron Beam Melting", EBM), das selektive Laser-Sinterverfahren ("Selective Laser Sintering", SLS), das "Binder Jetting"-Verfahren, das Schmelzschichtungsverfahren ("Fused Deposition Modeling", FDM) und die Stereolithografie.

Bei dem Laser-Aufschmelzverfahren etwa wird ein Pulverbett aus feinen Metallpartikeln mit einer ebenen Oberfläche bereitgestellt und an definierten Stellen mit Hilfe eines Laserstrahls aufgeschmolzen, woraufhin es wieder in den festen Zustand übergeht. Dabei erfolgt eine Verbindung mit danebenliegendem Pulvermaterial. Der Laser kann dabei gewünschte Bahnen auf der Oberfläche abfahren, welche beliebig komplex sein können. An den vom Laser überstrichenen Bereichen wird eine Schicht eines des gewünschten Objekts geschaffen. Danach erfolgt das Auftragen einer weiteren Pulverschicht sowie das Aufschmelzen der gewünschten Bereiche in dieser weiteren Pulverschicht. Auf diese Weise wird eine Verbindung zu der darunterliegenden Schicht durchgeführt. Folglich wird mit noch weiteren Pulverschichten das Objekt sukzessive schichtweise aufgebaut.

Bei diesem Prozess werden aus Informationen über die zu fertigende Geometrie, welche etwa aus einem CAD-Modell stammen, für jede Schicht die betreffenden Bereiche bestimmt, die aufzuschmelzen sind. Da dies über eine Vielzahl von Schichten durchgeführt wird, wird dies also für Koordinaten in 3D (oder anders ausgedrückt, Volumenelemente oder Voxel) durchgeführt. Nachdem die letzte Schicht gefertigt wurde, kann das Bauteil aus dem Pulverbett entfernt werden. Das nicht aufgeschmolzene Pulver und eventuelle Stützstrukturen werden entfernt, daraufhin liegt die gewünschte Geometrie vor, welche als fertiges Bauteil genutzt oder weiteren Fertigungsschritten (z. B. Nachbearbeitung der Oberfläche) zugeführt werden kann.

Der Fertigungsprozess der additiven Fertigung ist vergleichsweise komplex. Verschiedenste Parameter haben einen direkten Einfluss auf die Geometrie des gefertigten Bauteils und umfassen etwa Korngröße, Form und Oberflächeneigenschaften des verwendeten Pulvers, Schichtdicke, Leistung des Lasers, Spotdurchmesser und Bahn des Lasers, Vorheiztemperatur des Pulverbetts, Orientierung der Geometrie im Pulverbett, verwendete Stütz- und Hilfsstrukturen (z. B. für die geometrische Stabilität und den Wärmetransport), und viele weitere. Daher entspricht die gefertigte Geometrie oft nicht der gewünschten Geometrie der genannten 3D-Koordinaten, an welchen das Pulver nominal aufgeschmolzen wurde. Insbesondere können aufgrund thermischer Effekte Deformationen der Gesamtgeometrie oder lokale Abweichungen der Oberfläche auftreten. Diese Effekte bzw. Deformationen können teilweise vorab simuliert oder durch die Messung der Geometrie von gefertigten Prototypen bestimmt werden, wobei diese Informationen wiederum genutzt werden können, um den Fertigungsprozess zu korrigieren. Eine Möglichkeit ist es, die Geometrie der aufzuschmelzenden Koordinaten bzw. Volumenelemente entsprechend der Abweichungen von der Soll-Geometrie anzupassen, so dass die Abweichungen im nächsten Bauprozess bzw. in der nächsten Iteration möglichst nicht mehr auftreten. Auch im Inneren des Materials können verschiedene Defekte wie etwa Poren, Lunker, Gefügeauflockerungen, Porositäten, Risse, Delaminationen oder Einschlüsse auftreten. Diese Defekte sind meist unerwünscht, da sie die mechanischen Eigenschaften negativ beeinflussen.

Vor diesem Hintergrund liegt der vorliegenden Erfindung die Aufgabe zugrunde, die zuvor genannten Nachteile des Standes der Technik zu überwinden und ein verbessertes Verfahren zur Bestimmung von Defekten eines Objekts bereitzustellen.

Hauptmerkmale der Erfindung sind in den Ansprüchen 1 und 13 angegeben. Ausgestaltungen sind Gegenstand der Ansprüche 2 bis 12.

Hierdurch wird ein Verfahren geschaffen, welches erlaubt, unmittelbar aus bei der additiven Herstellung anfallenden Prozessdaten potentielle Defekte eines Objekts zu erkennen. Hierzu werden in einem vorbereitenden Vorgang Positionen von Defekten in einem oder mehreren Objekten in Messdaten der Objekte identifiziert. Positionen können dabei einzelnen Koordinaten, aber auch klar definierte Volumenbereiche bzw. Geometrien sein. Die Messdaten können dabei durch übliche bildgebende Verfahren und anschließende Auswertung generiert werden. Die angefallenen Prozessdaten der Objekte, die mittels Messdaten untersucht werden, werden hier als erste Prozessdaten bezeichnet. Die Positionen der Defekte, die durch die Defektkoordinaten definiert werden, werden mit dem Projektdatenkoordinatensystem der ersten Prozessdaten korreliert. Anschließend werden die ersten Prozessdaten mit den korrelierten Koordinaten als Trainingsdaten abgelegt. Durch die Trainingsdaten wird dem lernfähigen Algorithmus die Möglichkeit gegeben, in den ersten Prozessdaten vorkommende charakteristische Merkmale zu erlernen bzw. zu erkennen, die mit den erkannten Defekten bzw. Defektartefakten und auf der anderen Seite mit defektfreien Bereichen bzw. Materialbereichen einhergehen. Anschließend kann der lernfähige Algorithmus Defekte bereits während der Herstellung weiterer Objekte in den während der Fertigung anfallenden Prozessdaten ermitteln. Die Prozessdaten der weiteren Objekte werden hier als zweite Prozessdaten bezeichnet.

In einem ersten Verfahrensschritt werden erfindungsgemäß folglich ortsaufgelöste erste Prozessdaten von n Objekten ermittelt, wobei die ersten Prozessdaten während eines additiven Fertigungsprozesses zur Herstellung der n Objekte erfasst werden, wobei die ersten Prozessdaten für jedes der n Objekte ein Prozessdatenkoordinatensystem definieren.

Prozessdaten sind im Sinne der Erfindung als Daten zu verstehen, die direkt während des additiven Fertigungsprozesses aufgenommen werden können und Informationen über verschiedene Größen bereitstellen. Aufgrund der sukzessiven Materialanhäufung oder Materialverfestigung entlang geometrisch vorgegebenen einem bekannten zeitlichen Verlauf folgenden Bahnen oder Schichten sind bei der Durchführung einer die Herstellung begleitenden, regelmäßigen oder kontinuierlichen Erfassung die Prozessdaten für sich bereits ortsaufgelöst. Insbesondere könnten die Prozessdaten in einem regelmäßigen Gitter, etwa einem Raster aus einzelnen Volumenelementen (Voxel), vorliegen oder in ein solches Raster transformiert werden. Die Prozessdaten können verschiedenste physikalische Eigenschaften repräsentieren, wobei die Art der Prozessdaten insbesondere von der Art der Erfassung abhängt.

Als Prozessdaten können etwa eine optische Messgröße aufweisen. Wird ein laserbasiertes Fertigungsverfahren eingesetzt, etwa SLM oder SLS, könnte eine Kamera oder eine Photodiode in einem Strahlengang eines Lasers liegen und durch das Material zurückreflektiertes Licht erfassen. Es könnte sinnvoll sein, jedes einzelne mit dem Laser bestrahlte Volumenelement zu untersuchen und die von dem Material zurückgestrahlte Lichtleistung zu detektieren. Es könnte durch eine geeignete Optik sichergestellt werden, dass keine Reflexionen des Lasers gemessen werden, sondern lediglich die Emissionen des erhitzten Materials. Eine solche Messung kann sich anbieten, da die optischen Eigenschaften eines Materialabschnitts von seiner Qualität abhängen können. Werden etwa in einem Bereich Fluktuationen der zurückgestrahlten Lichtleistung detektiert, könnte dies ein Hinweis darauf sein, dass in diesem Bereich Defekte aufgetreten sind.

Es wäre ebenso eine simultane optische Erfassung der gesamten Schicht während des Bauvorgangs denkbar, beispielsweise durch eine Kamera. Zusätzlich könnte eine Erfassung von laserinduziertem Ultraschall erfolgen. Alternativ oder zusätzlich dazu kann nach Fertigung einer Schicht des Objekts die Geometrie dieser Schicht vermessen werden, etwa per Streifenlichtprojektion, oder es kann eine optische Aufnahme der Schicht angefertigt werden. Es sind allerdings noch weitere Varianten denkbar, begleitende Messungen durchzuführen und Prozessdaten zu erfassen. An dieser Stelle sei jedoch angemerkt, dass unerheblich ist, wie genau die Prozessdaten aufgenommen werden und welche physikalischen Größen dabei erfasst werden. Es ist indes für das erfindungsgemäße Verfahren wichtig, dass ortsaufgelöste Prozessdaten zur Verfügung stehen.

Zu beachten ist hierbei, dass die Prozessdaten zunächst in der Soll-Geometrie des zu fertigenden Bauteils bzw. der aufzuschmelzenden Koordinaten vorliegen, da sie der jeweiligen momentanen Position im Fertigungsprozess zugeordnet werden. Deformationen sind zu dem Zeitpunkt, an dem die einzelnen Messvorgänge durchgeführt wurden, noch nicht aufgetreten. Die ersten Prozessdaten bzw. die Prozessdaten allgemein liegen folglich nicht in der exakten Ist-Geometrie des gefertigten Objekts vor.

Zur Vorbereitung des Trainings des lernfähigen Algorithmus werden die genannten Trainingsdaten geschaffen. Hierzu erfolgt zunächst die additive Herstellung einer bestimmten Anzahl n von Objekten. Die Anzahl n kann dabei bedarfsweise gewählt werden und insbesondere von der Zuverlässigkeit und Wiederholbarkeit des Fertigungsverfahrens gewählt werden.

Entsteht nur in Ausnahmefällen an irgendeiner Stelle eines Objekts ein Defekt, kann die Anzahl n entsprechend hoch gewählt werden, so dass eine repräsentative Anzahl von Defekten mit Prozessdaten korrelierbar ist. Ist aufgrund besonders hoher Ansprüche an die Bauteilgüte, besonders feiner Strukturen und eines besonderen Materials häufiger mit örtlichen Defekten zu rechnen, kann die Anzahl n auch geringer gewählt werden. Ziel ist, eine repräsentative Anzahl n von Objekten herzustellen, die mit bekannten Verfahren zerstörungsfrei auf Defekte geprüft werden.

Ein Defekt ist im Sinne der Erfindung als ein Zustand zu verstehen, in dem das gefertigte Objekt an einer entsprechenden Stelle nicht die gewünschte Eigenschaft aufweist, die eigentlich für das hergestellte Objekt vorgesehen ist. Dies kann zum Beispiel eine lokale Abweichung einer äußeren Geometrie eines räumlichen Abschnitts des hergestellten Objekts sein. Ein typisches Beispiel hierfür könnte eine lokale Abweichung der Oberfläche des räumlichen Abschnitts von der Soll-Geometrie sein. Basiert das Herstellverfahren auf dem selektiven Aufschmelzen von Material könnte zum Beispiel im Bereich der Oberfläche eines Abschnitts zu viel Material aufgeschmolzen worden sein. Insbesondere könnten darunter relativ kleinskalige Deformationen fallen, wie etwa Dellen oder eine Gratbildung.

In einem weiteren Beispiel können die Abweichungen auch lokale Abweichungen einer inneren Beschaffenheit des räumlichen Abschnitts umfassen. Dies kann sich etwa auf vorhandene Poren, Lunker, Ausgasungen, Gefügeauflockerungen, Porositäten, Risse, Delaminationen oder Einschlüsse von Luft, einem anderen Gas, Rohmaterial oder eines Vakuums beziehen.

Die Untersuchung der n Objekte zur Ermittlung von Messdaten umfasst die Verwendung eines Computertomographen.

Weiter folgt eine direkte, pixel- oder voxelweise Identifizierung von Bereichen, welche von Defekten betroffen sind, um die Positionen von Defekten zu ermitteln. Die Positionen der Defekte werden durch die Defektkoordinaten repräsentiert. Weiterhin ist die Bestimmung der Kantenlinien zwischen Defekten und Material denkbar. Bei der Untersuchung kann insbesondere eine Analyse von Grauwert-, Gradient- und Formeigenschaften erfolgen. Die Defektkoordinaten können folglich Informationen über alle Volumenelemente des hergestellten Objekts aufweisen, die Defekte aufweisen, wobei einzelnen Volumenelementen oder Gruppen von Volumenelementen Defektattribute zugeordnet werden können.

Die Erkenntnisse aus der Untersuchung der n Objekte können dann zielführend verwendet werden, wenn sie mit den ersten Prozessdaten, die bei der Herstellung der n Objekte angefallen sind, korreliert werden. Die ersten Prozessdaten können recht komplex sein und Defekte könnten sich auf unterschiedliche Weise als voraussichtlich sehr kleine Teilmenge in ihnen manifestieren. Unregelmäßigkeiten in den ersten Prozessdaten müssen auch nicht zwangsläufig einem Defekt in dem gefertigten Objekt entsprechen, da etwa ein in einer Schicht auftretender Defekt durch aufgeschmolzenes Material einer darüber liegenden Schicht eliminiert wird. Eine Korrelation der Defektkoordinaten und der ersten Prozessdaten kann folglich zum Sammeln von Trainingsdaten verwendet werden, mit denen ein lernfähiger Algorithmus trainiert werden kann. Der lernfähige Algorithmus kann zur Untersuchung zukünftiger (zweiter) Prozessdaten einsetzbar sein.

Lernfähige Algorithmen sind in der Lage, aus mehreren Beispielen einer Problemstellung Muster oder Regeln zu erkennen oder zu ermitteln, die insgesamt eine Verallgemeinerung ausbilden. Geeignete lernfähige Algorithmen können zum Beispiel künstliche neuronale Netze, "Deep Learning" bzw. maschinelles Lernen im Allgemeinen oder Template Matching umfassen. Konventionelle Algorithmen zur Bildverarbeitung bzw. Mustererkennung können ebenso eingesetzt werden, bei denen bestimmte Einstellparameter entsprechend einstellbar sind, welche beispielsweise in der Art optimiert werden, dass sie für die Trainingsdaten möglichst gute Ergebnisse ergeben.

Als lernfähige Algorithmen können neben den vorangehend genannten Algorithmen auch Verfahren wie "Support Vector Machine", "Random Forest" oder eine einfache Regression verwendet werden. Das Trainieren des lernfähigen Algorithmus mittels der Trainingsdaten kann dann als weitgehend abgeschlossen betrachtet werden, wenn der lernfähige Algorithmus beispielsweise in einem Testlauf aus den ersten Prozessdaten zuverlässig erkennt, ob in einem Bereich Defekte vorliegen oder nicht.

Es ist dabei zu beachten, dass die Trainingsdaten jeweils für eine bestimmte Ausgestaltung des herzustellenden Objekts unter gleichbleibenden Herstellbedingungen wiederverwendbar sind. Werden grundlegende Eigenschaften des Objekts oder die Herstellbedingungen geändert, sollten neue Trainingsdaten gesammelt werden.

Für das Anlernen könnten auch Trainingsdaten von einer anderen Quelle von Prozessdaten vorliegen, für welche bereits eine geeignete Defekterkennung möglich ist. Diese Information könnte dann genutzt werden, um die Defekterkennung der ersten Prozessdaten zu trainieren.

Das erfindungsgemäße Verfahren erlaubt zusammenfassend einen lernfähigen Algorithmus zu trainieren, um mit ihm eine zerstörungsfreie Prüfung von additiv hergestellten Objekten während oder nach ihrer Herstellung auf eventuelle Defekte durchzuführen. Direkt nach der Fertigung oder bereits während der Fertigung kann durch den lernfähigen Algorithmus eingeschätzt werden, ob in dem Objekt kritische Defekte vorliegen.

Gemäß einem Beispiel der Erfindung kann der Schritt Analysieren der zweiten Prozessdaten auf Defekte mittels des lernfähigen Algorithmus während des Ermittelns der zweiten Prozessdaten durchgeführt wird. Dabei können die zweiten Prozessdaten bereits während ihrer Ermittlung bei der Fertigung des Objekts mittels des additiven Fertigungsverfahrens durch den lernfähigen Algorithmus analysiert werden. Dies bewirkt, dass bereits zu Beginn der Herstellung des Objekts erzeugte Defekte mittels des lernfähigen Algorithmus zeitnah während der weiteren Herstellung ermittelt werden können. Falls die Kritikalität des Defekts es erfordert, kann dieses Objekt damit bereits während der Herstellung ausgemustert werden, d. h. die Herstellung kann vorzeitig abgebrochen werden. Damit kann Zeit und Material gespart werden, da Objekte, bei denen bereits während der Herstellung kritische Defekte festgestellt werden, bereits im unvollständig hergestellten Zustand ausgemustert werden können. Weiterhin ist es denkbar, auf Basis der Informationen über die Defekte für die laufende oder folgende Fertigungsprozesse die Fertigungsparameter so anzupassen, dass weitere Defekte vermieden oder bereits bestehende Defekte wieder repariert werden können.

Gemäß einem Beispiel der Erfindung wird bei der Herstellung des Objekts jeweils für ein bei der Herstellung bearbeitetes Volumenelement oder eine räumliche Koordinate eine physikalische Messgröße für die ortsaufgelösten Prozessdaten erfasst. Dies betrifft sowohl die ersten, als auch die zweiten Prozessdaten. Die Prozessdaten werden folglich im Wesentlichen kontinuierlich mit der Herstellung des Objekts aufgebaut und das Ermitteln der ersten bzw. zweiten Prozessdaten kann so optimal in die Herstellung integriert werden. Wie vorangehend erwähnt kann insbesondere bei laserbasierten Fertigungsverfahren eine Verwendung des Lasers für die Durchführung einer gewünschten Messung erfolgen.

Bei der Herstellung des Objekts können jeweils für ein bei der Herstellung bearbeitetes Volumenelement oder eine räumliche Koordinate mindestens zwei unterschiedliche physikalische Messgrößen für die ortsaufgelösten ersten und zweiten Prozessdaten erfasst werden.

Durch die Verwendung unterschiedlicher Messgrößen kann eine Messung einer ersten Messgröße durch die Messung einer zweiten Messgröße gestützt werden. Mitunter können unterschiedliche Defektarten auftreten, die mit einer der Messgrößen besonders gut detektierbar ist, mit der anderen Messgröße jedoch nicht. Durch die kombinierte Erfassung beider Messgrößen kann eine Verbesserung der Identifizierung der Defekte erreicht werde. Beispielsweise könnte eine Photodiode verwendet werden, um von aufgeschmolzenem Material reflektierte Laserstrahlen zu erfassen. Damit kann etwa eine Helligkeit ermittelt werden, bzw. der Reflexionsgrad zumindest während eines diskreten Zeitpunkts. Zum anderen kann parallel dazu auch eine Kamera eingesetzt werden, welche eine deutlich größere Anzahl von Informationen erfasst und in einem bestimmten Abschnitt des Objekts zumindest eine örtlich aufgelöste Abstufung von Helligkeiten als Prozessdaten bereitstellt. Es ist nicht erforderlich, dass die ersten und zweiten Prozessdaten gleichartige Messgrößen aufweisen. Die Messgrößen der ersten und zweiten Prozessdaten können sich unterscheiden. So können die ersten Prozessdaten z. B. auf Daten einer Photodiode basieren und die zweiten Prozessdaten z. B. auf Daten einer Kamera.

Die ortsaufgelösten ersten und zweiten Prozessdaten können Informationen darüber aufweisen, in welcher Reihenfolge Volumenelemente oder räumliche Koordinaten während der Herstellung bearbeitet werden. Darüber werden folglich zeitabhängige Aussagen zugänglich, ob etwa die Herstellung eines Volumenelements die Herstellung eines anderen Volumenelements beeinflusst oder ob ein Defekt einer Materialschicht durch eine nachfolgende Materialschicht behebbar oder behoben ist. Die (ersten oder zweiten) Prozessdaten können folglich Tupel aufweisen, welche mehrere Datenfelder mit Zeitstempel und Messgrößen aufweisen. Weiter können die Daten in einem räumlichen Gitter angeordnet vorliegen, wobei jeder Gitterpunkt einen Datensatz mit mindestens einer Messgröße aufweist.

In diesem Zusammenhang ist denkbar, auch weitere globale oder lokal aufgelöste Parameter in den Prozessdaten als direkten Datenstrom oder in Form von Metadaten zu speichern, wie etwa reale und/oder nominale Werte für eine Laserleistung, eine Größe eines Laserbrennflecks, eine Schichtdicke, eine Temperatur des Pulverbetts, Eigenschaften des verwendeten Pulvers, eine Geschwindigkeit und Spur des Laserbrennflecks oder weitere. Diese Parameter erlauben, in Verbindung mit den weiteren Prozessdaten eine Auswertung von direkt abhängigen Messgrößen. Dies kann zum Beispiel die von Photodioden erfassten Helligkeitswerte betreffen, welche direkt von der Laserleistung und/oder der Größe eines Laserbrennflecks abhängen können. Weiter können die zweiten Prozessdaten auf Deformationen in Form von Abweichungen der Oberflächengestalt zumindest eines Volumenelements von einer Soll-Geometrie des Objekts als Defekt untersucht werden. Dies kann spezielle Messgrößen umfassen, welche über reine Helligkeitsinformationen einer Photodiode hinausgehen können. Die Oberfläche ist dabei insbesondere die freie Oberfläche, welche in Bearbeitungsrichtung weist und mit einer nachfolgenden Schicht, sofern es sich nicht um eine äußere Oberfläche handelt, bedeckt wird.

Beim Laseraufschmelzverfahren oder anderen Verfahren liegt ein zumindest einmaliger Phasen- oder Zustandsübergang des Materials bei der Herstellung des entsprechenden Volumenelements vor. Etwa kann beim Laseraufschmelzverfahren ein metallisches Pulver aufgeschmolzen werden, um dann wieder in den festen Zustand überzugehen. Durch eine darunterliegende Fehlstelle oder durch unvollständig aufgeschmolzenes Material könnte sich eine Einbuchtung oder eine Auswölbung ergeben, welche die Oberfläche des betreffenden Volumenelements beeinträchtigt. Dieser Defekt in Form einer deformierten Oberfläche könnte durch eine Bilderfassung, auch unter Zuhilfenahme einer Streifenprojektion durch einen Musterprojektor, erfasst werden und in die zweiten Prozessdaten einfließen.

Die zweiten Prozessdaten können weiter auf offene oder geschlossene Hohlräume mit Einschluss von Rohmaterial oder Fluid als Defekt untersucht werden. Dies könnte neben einer unvollständigen Aushärtung von Material auch eine fehlerhafte Herstellung eines Überhangs betreffen.

Das Untersuchen der n Objekte erfolgt durch eine computertomographische (CT) Messung. Diese ist in der Lage, auch komplexe innere Geometrien zu erfassen und es können Messdaten geliefert werden, die hinsichtlich Geometrieabweichungen und Materialdefekten sehr aussagekräftig sind. Für die Anzahl von n Objekten können folglich zunächst erste Prozessdaten ermittelt werden, um nach Fertigstellung der betreffenden Objekte computertomographische Aufnahmen zu erzeugen und diese zur Ermittlung der Messdaten zu untersuchen. Die ortsaufgelösten ersten Prozessdaten ähneln in ihrer Struktur den Daten einer computertomographischen Aufnahme, was dazu führt, dass sich diese Daten gut miteinander korrelieren lassen. Daten der CT-Aufnahmen können einer konventionellen Defektanalyse unterworfen werden, woraus für jedes der n Objekte eine Defektmaske abgeleitet werden kann. Dies ist als Darstellung zu verstehen, welche Informationen über diejenigen Bereiche enthält, in denen Defekte im Bauteil vorhanden sind.

Aus den Prozessdaten können beispielsweise weiter synthetische CT-Daten erzeugt werden. Dabei wird eine Vorhersage über die lokale Röntgenabsorption bzw. Materialdichte genutzt. Diese kann daraufhin mit konventionellen Algorithmen bzw. Algorithmen, welche sonst für die Analyse von CT-Daten genutzt werden, hinsichtlich Defekten analysiert werden. Die Trainingsdaten sind in diesem Fall die Grauwerte der CT-Daten selbst.

In diesem Zusammenhang ist zu erwähnen, dass Algorithmen zur Analyse von CT-Daten ebenfalls lernfähige Algorithmen sein könnten. Ein Beispiel hierfür wäre ein Algorithmus, welcher das Volumen des Objekts in Material oder Hintergrund bzw. Defekt und defektfrei segmentiert. Simulierte Messungen können zum Anlernen eines Algorithmus verwendet werden, der etwa auf dem Feldvergleich basiert.

Das Untersuchen der Messdaten umfasst den Unterschritt: Segmentieren von Defekten in den ermittelten Messdaten zum Identifizieren von Volumenelementen, die einen Defekt aufweisen. Dadurch erfolgt eine ortsaufgelöste Information darüber, welche Volumenelemente die Geometrie von Defekten beschreiben. Dazu könnten einzelne Volumenelemente, die einen Defekt aufweisen, identifiziert werden. Die verbleibenden Volumenelemente können als defektfrei markiert oder durch ihre fehlende Markierung als defektfrei angesehen werden. Es kann vorteilhaft sein, vor der Segmentierung Artefakte zu entfernen, die bei CT-Daten üblicherweise auftreten können und eine Analyse der CT-Daten erschweren würden. Die gewählte Größe der einzelnen Volumenelemente der CT-Daten kann von dem Herstellverfahren des Objekts abhängig gemacht werden. Die Segmentierung könnte mit bekannten und für CT-Daten erprobten Analyseverfahren generiert werden. Durch Korrelation der segmentierten Defektdaten mit den ersten Prozessdaten kann das Trainieren des lernfähigen Algorithmus erfolgen. Aus später aufgenommenen zweiten Prozessdaten können diese Informationen dann direkt mittels des lernfähigen Algorithmus abgeleitet werden.

Weiter kann das Segmentieren von Defekten in den ermittelten Messdaten in mindestens zwei Defektklassen durchgeführt werden, wobei im Schritt Korrelieren die mindestens zwei Defektklassen mit den entsprechenden korrelierten Koordinaten des Prozessdatenkoordinatensystems verknüpft werden. Der lernfähige Algorithmus wird damit weiter darauf trainiert jeweils verschiedene Defektklassen in den ersten und zweiten Prozessdaten zu erkennen. Die mindestens zwei Defektklassen können die vorangehend bereits erwähnten unterschiedlichen Defektklassen aufweisen, die unter anderem Poren, Lunker, Gefügeauflockerungen, Porositäten, Risse, Delaminationen, Einschlüsse oder Abweichungen der Oberflächengestalt umfassen. Die Einschlüsse könnten ferner in luftgefüllte Hohlräume, mit Pulver oder anderem Rohmaterial gefüllte oder mit Fremdmaterial gefüllte Hohlräume unterschieden werden. Einem Anwender kann dies die Entscheidung darüber erleichtern, ob das hergestellte Objekt noch verwendbar ist.

Des Weiteren kann es vorteilhaft sein, bei der Segmentierung einzelne Volumenelemente mit der Information der Wahrscheinlichkeit eines Fehlers zu versehen, dass ein Defekt vorliegt. Statt einer eher binären Segmentierung in defekte oder defektfreie Volumenelemente erlaubt dies dem lernfähigen Algorithmus eine Wahrscheinlichkeitsabschätzung, ob ein betrachtetes Volumenelement einen bestimmten Defekt aufweist. Hieraus kann eine Art Wahrscheinlichkeitskarte oder -matrix gewonnen werden. Es versteht sich, dass diese auch Wahrscheinlichkeitsinformationen zu den einzelnen Defektklassen aufweisen kann.

Die Messdaten könnten analog bzw. manuell aufbereitet werden. Hierdurch gelangen weitere Informationen in das Training des lernfähigen Algorithmus, die aus den bildhaften Informationen nicht ersichtlich sind. Beispielsweise können einzelne Defekte, die sich über mehrere Volumenelemente erstrecken, als kritisch oder nicht kritisch markiert werden. Das Trainieren führt dann dazu, dass nicht jedes einzelne Volumenelement für sich bewertet wird, sondern eine Vorhersage für größere Bereiche der Prozessdaten trainiert wird. Toleranzgrenzen für kritische Defekte könnten auf diese Weise ebenso trainiert werden.

Weiter können vor dem Korrelieren das Prozessdatenkoordinatensystem und das Messdatenkoordinatensystem für jedes der n Objekte mittels einer elastischen, multi-modalen Registrierung registriert werden. Dadurch werden die Messdaten und die ersten Prozessdaten, welche aufgrund auftretender Deformationen in zwei voneinander unabhängigen Koordinatensystemen vorliegen, in dieselbe Struktur bzw. ein einzelnes Koordinatensystem überführt. Erst dann ist ein direkter Abgleich zwischen den erkannten Defekten und den zugehörigen Prozessdaten möglich. In einer bevorzugten Ausführungsform werden folglich vor dem Korrelieren der ersten Prozessdaten und der Defektkoordinaten die Messdaten und die ersten Prozessdaten miteinander registriert. Aus dem Stand der Technik sind Verfahren zur Registrierung bekannt, insbesondere aus dem Bereich der Medizintechnik.

Im Allgemeinen kann zur Registrierung ein Modell zur Beschreibung der Abbildung aus dem bildgebenden Verfahren zur Ermittlung der ersten Defektdaten aufgestellt werden. Dabei können zum Beispiel Kontrollpunkte bzw. Stützstellen definiert und die Verformung bzw. Abbildung zwischen diesen interpoliert bzw. extrapoliert werden. Die Kontrollpunkte können dabei in einem regelmäßigen oder in einem unregelmäßigen Raster liegen. Das unregelmäßige Raster kann beispielsweise in relevanten Bereichen, z. B. in der Umgebung der Oberfläche, in der Umgebung von Defekten, in Bereichen mit großer Deformation oder in Bereichen, in denen die Abbildung keine gute Annäherung an die Soll-Geometrie erreicht, eine größere Auflösung haben. Dies verringert die Gesamtzahl von Kontrollpunkten und verringert somit die nötige Rechenzeit. Gemäß einem weiteren Beispiel zur Beschreibung der Abbildung können abschnittsweise normale rigide Anpassungen bestimmt und ggf. zwischen diesen interpoliert werden. Weiter kann zur Beschreibung der Abbildung beispielsweise eine ggf. ortsabhängige Abbildung global und somit für den gesamten betrachteten, dreidimensionalen Raum analytisch beschrieben werden, z. B. mit Hilfe einer Fourier-Reihe.

Zudem gibt es verschiedene Möglichkeiten, die im betrachteten Fall nötige Abbildung zu ermitteln und somit die Parameter des oben genannten Modells zu bestimmen. Hierfür können ein Fehlermaß und ein Optimierer verwendet werden.

Das Fehlermaß beschreibt, wie gut die Soll-Geometrie und die Messdaten übereinstimmen. Benötigt werden Anhaltspunkte gleicher Strukturen in beiden Datensätzen. Dies können jeweils beispielsweise die Oberfläche bzw. Oberflächenstrukturen wie Ecken und Kanten sein, aber auch Defekte im Inneren, welche sich in Variationen der Grauwerte äußern.

Es können auch andere korrespondierende Merkmale genutzt werden, beispielsweise gut erkennbare Geometrien, sog. Landmarks, durch eine Auswertevorschrift definierte Geometrien bzw. Geometriebereiche oder manuell definierte Geometrien oder Landmarks. Als Landmarks können insbesondere markante Geometrien, beispielsweise Oberflächen oder Oberflächenstrukturen wie Ecken oder Kanten, ausgewählt werden. Denkbar wäre auch die Verwendung von klar erkennbaren Defekten oder gewünschten Hohlräumen oder Kanten im Innern des herzustellenden Objekts.

Prinzipiell kann dieses Fehlermaß anhand von Geometrien und somit Grenzflächen zwischen Material und Hintergrund oder direkt auf den Bilddaten bzw. Grauwerten der Datensätze definiert werden. Es können auch beide Methoden kombiniert werden.

Beim Fehlermaß kann es sich beispielsweise um eine Kreuzkorrelationsfunktion zwischen Grauwerten der Prozessdaten- und den Defektdatenbildern bzw. Messdaten handeln. Weiter kann als Fehlermaß beispielsweise eine Distanzfunktion, basierend auf der Umhüllenden des Bauteils genutzt werden.

Über Transferfunktionen kann eine Transformation der ersten Defektdaten in ein anderes Koordinatensystem oder eine andere Struktur durchgeführt werden. Die Transferfunktionen können durch den Optimierer, der auf Basis einer Bewertungsfunktion durchgeführt wird, angepasst werden. Bei der Berechnung der Bewertungsfunktion kann für jeden Rechenschritt ein Fehlermaß ermittelt werden, welches durch den Optimierer zu minimieren ist. Die Anpassung kann mit Zunahme von Stützstellen eine höhere Rechenleistung und/oder Rechendauer erfordern. Für sehr einfache Defekte und geringe Verformungen kann eine starre Transformation ausreichen. Ein weiterer Freiheitsgrad der Abbildung kann eine globale Skalierung sein.

Der Optimierer kann beispielsweise mit einer reduzierten Anzahl von Landmarks gestartet werden, um nach erster Annäherung die Anzahl der Landmarks sukzessive in einem iterativen Prozess zu erhöhen. Es könnten beispielsweise Defekte identifiziert werden, welche sowohl in den Messdaten als auch in den ersten Prozessdaten vorhanden sind. Lediglich diese werden dann bei einer weiteren, elastischen, multi-modale Registrierung berücksichtigt. Dies kann insgesamt die Konvergenz beschleunigen oder verbessern. Durch eine Regularisierung kann eine bei lernfähigen Algorithmen gelegentlich auftretende Überanpassung vermieden werden, so dass eine Konvergenz erfolgt, auch wenn bestimmte Landmarks nur in einem der betreffenden Datensätze aufzufinden sind.

In einem weiteren Beispiel kann vor der Durchführung der der elastischen, multimodalen Registrierung der ersten Prozessdaten an die Messdaten die zu erwartende Verformung des Objekts bei der additiven Fertigung berücksichtigt werden. Diese vorverformten ersten Prozessdaten können leichter bzw. besser an die Messdaten angepasst werden, da sie dieser Geometrie bereits näher sind. Die zu erwartende Verformung kann dabei z. B. mit Hilfe einer Simulation des additiven Fertigungsprozesses ermittelt werden.

In einem weiteren Beispiel kann die elastische, multimodale Registrierung ausschließlich anhand der Oberflächendaten der ersten Prozessdaten und der Messdaten ermittelt und dementsprechend auf die inneren Bereiche übertragen werden.

Hierbei kann auch eine mechanische Simulation der Verformung der inneren Bereiche unter Berücksichtigung der bekannten Verformung der Oberfläche durchgeführt werden. Die in den Messdaten ermittelten Defektkoordinaten können damit mittels der elastischen, multi-modalen Registrierung von den Messdaten mit den ersten Prozessdaten korreliert werden, ohne dass in den ersten Prozessdaten Defekte erkannt werden müssen. Damit können die Trainingsdaten auch ohne eine Erkennung der Defekte in den Prozessdaten gesammelt werden. Die Ermittlung von Trainingsdaten ist damit unabhängig von einer Erkennung von Defekten in den ersten Prozessdaten.

In einem weiteren Beispiel ist denkbar, dass ausschließlich Daten zu einzelnen Defekten registriert werden. Folglich können aus der Gesamtschau aller Volumenelemente eines Objekts etwa diejenigen Bereiche ausgefiltert werden, die als einen Defekt aufweisend angesehen werden. Dies kann das Sammeln von Trainingsdaten vereinfachen. Dabei wäre zu berücksichtigen, dass entsprechende einzelne Merkmale, die zu einem Defekt zugehörig zu interpretieren sind, auch in lediglich einem einzelnen Datensatz auftreten können. Wie vorangehend bereits erwähnt könnte etwa ein Defekt durch die Bearbeitung späterer Schichten wieder behoben werden, so dass dieser in der bildgebenden Untersuchung überhaupt nicht erscheint.

In einem weiteren Beispiel ist es denkbar, das Analysieren der zweiten Prozessdaten auf Defekte derart durchzuführen, dass auf Basis der zweiten Prozessdaten zugehörige synthetische Referenzdaten (beispielsweise Volumendaten einer computertomographischen Messung) erzeugt werden und diese daraufhin mit Hilfe von konventionellen Algorithmen hinsichtlich Defekten analysiert werden.

In der vorangehenden Beschreibung betreffen bestimmte Merkmale und Eigenschaften, die auf Prozessdaten ohne den Term "erste" oder "zweite" bezogen sind, sowohl erste als auch zweite Prozessdaten, ohne dies jeweils explizit zu nennen.

Das erfindungsgemäße Verfahren lässt sich durch zusätzliche Funktionen erweitern, die eine Aussage über die Auswirkungen von festgestellten Defekten aus zweiten Prozessdaten treffen können. Beispielsweise könnte aus einer Analyse der zweiten Prozessdaten möglicherweise eine exakte Bauteilgeometrie unter Berücksichtigung der Defekte abgeleitet werden. Dies eröffnet die Möglichkeit, geometrischen Größen und Toleranzen wie Maß, Form und Lage zu prüfen, eine Berechnung der Festigkeit, eine Simulation mechanischer, thermischer oder elektrischer Eigenschaften des Objekts durchzuführen. Hierdurch könnte eine Abschätzung getroffen werden, ob das Objekt die erforderlichen Eigenschaften für seine Verwendung erfüllt.

Das Verfahren kann weiter folgende Schritte aufweisen: Erfassen von Defektenpositionen in den ersten Prozessdaten, Identifizieren von Defektpaaren aus Defektkoordinaten in den Messdaten und erfassten Defektenpositionen in den ersten Prozessdaten, die mit einer Wahrscheinlichkeit oberhalb eines vordefinierten Wahrscheinlichkeits-Schwellenwertes einander zugeordnet sind, Registrieren des Prozessdatenkoordinatensystems und des Messdatenkoordinatensystems auf Basis der identifizierten Defektpaare. Die Defektpositionen können Koordinaten des Prozessdatenkoordinatensystems sein, die die Positionen der Defekte in den Prozessdaten definieren.

Damit werden ausschließlich Defekte bzw. Defektpaare verwendet, welche mit einer gewissen Sicherheit in Prozessdaten und Messdaten gefunden wurden. Damit wird eine effektive Registrierung bereitgestellt, die auf den Defektpaaren zwischen den ersten Prozessdaten und den Messdaten basiert. Dies verbessert die Registrierung und bewirkt, auch für die Bereiche zwischen den Defektpaaren, eine verbesserte Korrelation zwischen den Defektkoordinaten und den ersten Prozessdaten. Dadurch werden verbesserte Trainingsdaten generiert, die ein verbessertes Training des lernfähigen Algorithmus bewirken.

Weiter kann das Verfahren den Schritt aufweisen: Wiederholen der Schritte Identifizieren und Registrieren, wobei jede Wiederholung des Schritts Identifizieren auf Basis der unmittelbar vorher durchgeführten Registrierung durchgeführt wird, wobei die Wiederholung der Schritte Identifizieren und Registrieren so lange durchgeführt wird, bis eine vordefinierte Abbruchbedingung erfüllt wird, wobei nach einem Abbruch die zuletzt durchgeführte Registrierung für das Korrelieren verwendet wird.

Damit werden durch die in der vorherigen Wiederholung verbesserte Registrierung in der aktuellen Wiederholung mehr Defektpaare identifiziert, da die verbesserte Registrierung die Defekte in den ersten Prozessdaten und den Messdaten besser miteinander korreliert. Durch die verbesserte Erkennung von Defektpaaren, werden mehr Defektpaare identifiziert, mit denen eine weiter verbesserte Registrierung berechnet werden kann. Eine verbesserte Registrierung bewirkt eine verbesserte Korrelation der Defektkoordinaten mit den ersten Prozessdaten, sodass der lernfähige Algorithmus mit weiter verbesserten Trainingsdaten trainiert wird.

Eine Abbruchbedingung kann dabei sein, dass wenn der wiederholte Unterschritt Identifizieren im Vergleich zu dem Identifizieren im vorherigen Durchlauf keine zusätzlichen Defektpaare in den ersten Prozessdaten und den Messdaten identifiziert, die mit einer Wahrscheinlichkeit oberhalb eines vordefinierten Wahrscheinlichkeits-Schwellenwertes einander zugeordnet sind.

Das Verfahren kann weiter den Schritt aufweisen: Wiederholen der Schritte: Erfassen von Defektpositionen in den ersten Prozessdaten, wobei das Erfassen von Defektpositionen in den ersten Prozessdaten spätestens ab der ersten Wiederholung mittels des lernfähigen Algorithmus durchgeführt wird, Wiederholen der Schritte Identifizieren und Registrieren, wobei jede Wiederholung des Schritts Identifizieren auf Basis der unmittelbar vorher durchgeführten Registrierung durchgeführt wird, wobei die Wiederholung der Schritte Identifizieren und Registrieren so lange durchgeführt wird, bis eine vordefinierte Abbruchbedingung erfüllt wird, wobei nach einem Abbruch die zuletzt durchgeführte Registrierung für das Korrelieren verwendet wird, Korrelieren des zumindest einen Teilbereichs des Messdatenkoordinatensystems umfassend die ermittelten Defektkoordinaten der Objektdarstellung mit einem entsprechenden Teilbereich des Prozessdatenkoordinatensystems zum Sammeln von Trainingsdaten, Trainieren des lernfähigen Algorithmus zur Bestimmung von Defektkoordinaten in ortsaufgelösten Prozessdaten, die während eines additiven Fertigungsprozesses zur Herstellung eines Objekts erfasst werden, mittels der Trainingsdaten, wobei das Wiederholen der Schritte Erfassen, Wiederholen, Korrelieren und Trainieren so lange durchgeführt wird, bis eine weitere vordefinierte Abbruchbedingung erfüllt wird.

Durch eine verbesserte Registrierung kann, da bessere Trainingsdaten zur Verfügung stehen, der lernfähige Algorithmus besser auf eine Defekterkennung auf den Prozessdaten trainiert werden. Diese kann genutzt werden, mehr Defektpaare in den ersten Prozessdaten und den Messdaten zu identifizieren. Damit kann die Verbesserung der Registrierung weiter genutzt werden, um das Training des lernfähigen Algorithmus weiter zu verbessern.

Die weitere vordefinierte Abbruchbedingung kann dabei eintreten, wenn der lernfähige Algorithmus im Vergleich zum vorherigen Durchlauf keine neuen Defektpositionen in den ersten Prozessdaten erfasst.

Weiter betrifft die Erfindung ein Computerprogrammprodukt mit auf einem Computer ausführbaren Instruktionen, welche auf einem Computer ausgeführt den Computer dazu veranlassen, das Verfahren nach der vorangegangenen Beschreibung durchzuführen.

Vorteile und Weiterbildungen des Computerprogrammprodukts entsprechen den Vorteilen und Weiterbildungen des oben erläuterten Verfahrens. Daher wird in dieser Hinsicht auf die oben angeführte Beschreibung verwiesen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: ein Flussdiagramm eines erfindungsgemäßen Verfahrens; und
- Fig. 2: eine schematische Darstellung der Korrelierung von Defektkoordinaten mit dem Prozessdatenkoordinatensystem.

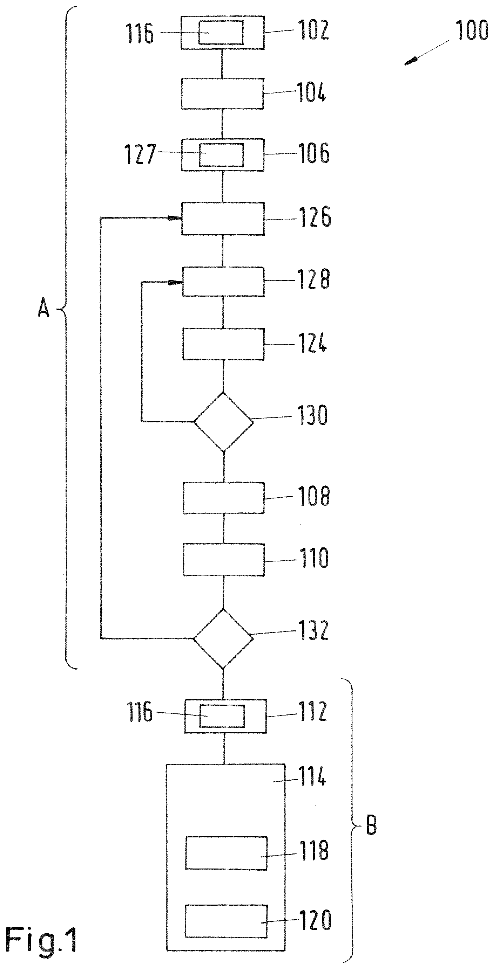

Fig. 1 zeigt ein Flussdiagramm eines computer-implementierten Verfahrens 100 zur Bestimmung von Defekten eines mittels eines additiven Fertigungsprozesses hergestellten Objekts. Das Verfahren 100 ist im Wesentlichen in zwei aufeinanderfolgende Vorgänge unterteilt. Ein erster, vorbereitender Vorgang A umfasst zunächst das Ermitteln 102 ortsaufgelöster erster Prozessdaten von n Objekten, die während eines additiven Fertigungsprozesses zur Herstellung der n Objekte erfasst werden. Der Schritt des Ermittelns 102 kann folglich auch ein Teil eines additiven Fertigungsprozesses eines Objektes sein. Die ersten Prozessdaten definieren für jedes der n Objekte ein Prozessdatenkoordinatensystem.

Jeweils für ein bei der Herstellung bearbeitetes Volumenelement oder eine räumliche Koordinate können dabei eine oder zwei (oder mehr) physikalische Messgrößen für die ortsaufgelösten Prozessdaten erfasst 116 werden.

Die ortsaufgelösten ersten und zweiten Prozessdaten können dabei Informationen darüber aufweisen, in welcher Reihenfolge Volumenelemente oder räumliche Koordinaten während der Herstellung bearbeitet werden.

Anschließend werden die n Objekte nach ihrer Herstellung in einem weiteren Schritt mittels bildgebender zerstörungsfreier Verfahren erfasst. Dabei werden Messdaten der n Objekte ermittelt 104. Die Messdaten definieren für jedes der n Objekte ein Messdatenkoordinatensystem. Die Ermittlung 104 der Messdaten Wird mittels CT-Messungen erfolgen.

Es folgt eine Untersuchung zumindest eines Teilbereiches der Messdaten. Dabei werden Defektkoordinaten ermittelt 106, die Defekten in der Objektdarstellung zugeordnet sind. Die resultierenden Messdaten aus einer CT-Messung werden in von einem Defekt betroffene Volumenelemente segmentiert werden 122, wobei die Defekte auch in mehrere Defektklassen segmentiert werden.

In einem weiteren optionalen Schritt werden Defektpositionen in den ersten Prozessdaten erfasst 126. Die Defektpositionen können Koordinaten im Prozessdatenkoordinatensystem angeben, die Defekten des Objekt in den Prozessdaten zugeordnet sind.

Die erfassten Defektpositionen aus den ersten Prozessdaten und die ermittelten Defektkoordinaten aus den Messdaten können optional verglichen werden. Dabei werden in einem weiteren optionalen Schritt Defektpaaren aus Defektkoordinaten in den Messdaten und erfassten Defektpositionen in den ersten Prozessdaten identifiziert 128, die mit einer Wahrscheinlichkeit oberhalb eines vordefinierten Wahrscheinlichkeits-Schwellenwertes einander zugeordnet sind. D. h., dass die Defektpaare Defektpositionen in den ersten Prozessdaten Defekte aufweisen, die mit hoher Wahrscheinlichkeit an einer Defektkoordinate in den Messdaten zu finden sind, und umgekehrt.

Auf Basis der identifizierten Defektpaare können das Prozessdatenkoordinatensystem und das Messdatenkoordinatensystem registriert 124 werden. D.h. es wird eine Abbildung ermittelt, die die Koordinaten des Prozessdatenkoordinatensystems und des Messdatenkoordinatensystems aufeinander abbildet. Die Registrierung 124 kann dabei eine elastische, multimodale Registrierung sein.

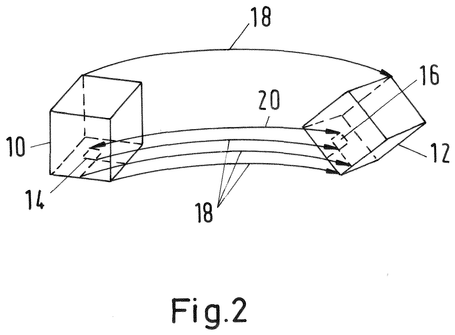

Fig. 2 zeigt zur Erläuterung der Registrierung 124 eine Visualisierung 10 von Prozessdaten eines Objekts und eine Visualisierung 12 von Messdaten eines Objekts, das mittels eines additiven Fertigungsverfahrens hergestellt wurde.

Das Objekt weist einen Defekt auf, der in der Visualisierung 10 mit der Referenznummer 14 und in der Visualisierung 12 mit dem Referenzzeichen 16 bezeichnet ist. Die Visualisierungen 10, 12 weisen unterschiedliche Koordinatensysteme auf, wobei die Visualisierung 10 ein Prozessdatenkoordinatensystem und die Visualisierung 12 ein Messdatenkoordinatensystem aufweist.

Die Pfeile 18 stellen eine Registrierung mittels einer Abbildung dar, die verschiedene Koordinaten des Prozessdatenkoordinatensystems auf die entsprechenden Koordinaten des Messdatenkoordinatensystems abbildet. Dabei kann auch eine inverse Abbildung vorgesehen sein, die die Koordinaten des Messdatenkoordinatensystems auf das Prozessdatenkoordinatensystem abbildet.

Der Defekt 14 und der Defekt 16, die den gleichen Defekt im Objekt in den Prozessdaten und den Messdaten darstellen, können als Defektpaar 20 identifiziert 128 werden.

Die Schritte Identifizieren 128 und Registrieren 124 können gemäß Figur 1 in einem optionalen Ausführungsbeispiel wiederholt 130 werden. Die Wiederholung 130 bewirkt eine iterative Verbesserung der Registrierung 124, da mittels der Registrierung 124 das Prozessdatenkoordinatensystem und das Messdatenkoordinatensystem aneinander ausgerichtet werden. Dabei können Defekte in den ersten Prozessdaten und den Messdaten, die bisher noch nicht als Defektpaare identifiziert wurden, durch die Abbildung der Registrierung miteinander verknüpft werden, so dass sie bei der darauffolgenden wiederholten Identifikation 128 als neue Defektpaare erkannt werden. Dadurch vermehrt sich die Anzahl der identifizierten Defektpaare in jeder Wiederholung 130. Die erhöhte Anzahl der Defektpaare bewirkt eine Verbesserung der Registrierung 124.

Die Wiederholung 130 kann durchgeführt werden, bis eine vordefinierte Abbruchbedingung erfüllt ist. Die vordefinierte Abbruchbedingung kann dabei dann erfüllt sein, wenn der wiederholte Unterschritt Identifizieren 128 im Vergleich zu dem Identifizieren 128 im vorherigen Durchlauf keine zusätzlichen Defektpaare in den ersten Prozessdaten und den Messdaten identifiziert. D.h. wenn keine weitere Verbesserung der Registrierung durch die Wiederholung der Schritte bewirkt wird.

Die ermittelten Defektkoordinaten aus den Messdaten werden in einem weiteren Schritt mit Koordinaten des Prozessdatenkoordinatensystems korreliert 108. D.h. die Defekte aus den Messdaten werden mit den Defekten aus den ersten Prozessdaten verglichen und miteinander in Beziehung gebracht. Damit werden mittels der korrelierten ersten Prozessdaten Trainingsdaten gesammelt. Weiter können auch defektfreie Bereiche der Messdaten mit den entsprechenden defektfreien Bereichen der ersten Prozessdaten korreliert werden. Auch die Korrelation der defektfreien Bereiche kann zu den Trainingsdaten beitragen.

Wenn beim Segmentieren 122 Defektklassen berücksichtigt wurden, können diese Defektklassen beim Korrelieren 108 mit den entsprechenden korrelierten Koordinaten des Prozessdatenkoordinatensystems verknüpft werden. Die Defektklassen werden dann ebenfalls Teil der Trainingsdaten und können später auch beim Auswerten der zweiten Prozessdaten mit dem trainierten lernfähigen Algorithmus genutzt werden.

In einem weiteren Schritt erfolgt das Trainieren 110 des lernfähigen Algorithmus. Dabei wird der lernfähige Algorithmus mittels der Trainingsdaten darauf trainiert, die Defekte in den ersten Prozessdaten zu erkennen und die Koordinaten der Defekte in den ersten Prozessdaten zu bestimmen.

Es kann ein weiterer optionaler Schritt erfolgen, in dem die Schritte Erfassen 126, Wiederholen 130, Korrelieren 108 und Trainieren 110 wiederholt 132 werden. Dabei werden zunächst die Defektenpositionen in den ersten Prozessdaten erfasst 126, wobei das Erfassen 126 von Defektpositionen in den ersten Prozessdaten mittels des trainierten lernfähigen Algorithmus durchgeführt wird. Der trainierte lernfähige Algorithmus erkennt dabei mit hoher Wahrscheinlichkeit und mit tendenziell höherer Genauigkeit mehr Defektpositionen in den ersten Prozessdaten als bei der initialen Erfassung 126 oder einer weiteren vorherigen Erfassung 126 erkannt wurden, da die Registrierung 124 durch die Wiederholungen 130 verbessert wurde. Dies bewirkt mit hoher Wahrscheinlichkeit eine Erhöhung der Anzahl an identifizierten Defektpaaren. Dadurch wird die Registrierung 124 durch eine erneute Wiederholung 130 weiter verbessert, so dass weiter verbesserte Trainingsdaten gesammelt werden können, mit denen der lernfähige Algorithmus ein verbessertes Training erhält. Mit dem verbesserten Training kann der lernfähige Algorithmus dann in einer weiteren Wiederholung 132 noch mehr Defektpositionen in den ersten Prozessdaten erfassen 126.

Die Wiederholung 132 kann so lange durchgeführt werden, bis eine weitere vordefinierte Abbruchbedingung erfüllt ist. Die weitere vordefinierte Abbruchbedingung kann erfüllt sein, wenn z. B. der lernfähige Algorithmus im Vergleich zum vorherigen Durchlauf keine neuen Defektpositionen in den ersten Prozessdaten erfasst. Es kann dann davon ausgegangen werden, dass entweder kein oder lediglich sehr wenig Optimierungspotential durch weitere Wiederholungen 132 ausgeschöpft werden kann.

Damit ist der vorbereitende Vorgang A beendet. Nach dem vorbereitenden Vorgang A kann der Vorgang B durchgeführt werden, bei dem potentielle Defekte ohne ein bildgebendes Analyseverfahren mittels des trainierten lernfähigen Algorithmus erkannt werden können. Hierzu werden ortsaufgelöste zweite Prozessdaten ermittelt 112, die während eines additiven Fertigungsprozesses zur Herstellung eines Objekts erfasst werden. Anschließend oder parallel dazu werden die zweiten Prozessdaten auf mögliche Defekte durch abschnittsweises Untersuchen der zweiten Prozessdaten auf Defekte mittels des trainierten lernfähigen Algorithmus analysiert 114. Es versteht sich, dass der Vorgang B für beliebige weitere Objekte wiederholt werden kann, die mittels des additiven Fertigungsprozesses hergestellt werden.

Das Analysieren 114 kann etwa das Untersuchen 118 der zweiten Prozessdaten auf Deformationen in Form von Abweichungen der Oberflächengestalt, in Form einer Soll-Geometrie des Objekts, zumindest eines Volumenelements als Defekt aufweisen. Des Weiteren kann auch das Untersuchen 120 der zweiten Prozessdaten auf offene oder geschlossene Hohlräume mit Einschluss von Rohmaterial oder Fluid als Defekt durchgeführt werden.

## Patentansprüche

1. Computer-implementiertes Verfahren zur Bestimmung von Defekten eines mittels eines additiven Fertigungsprozesses hergestellten Objekts, wobei während des additiven Fertigungsprozesses Volumenelemente oder räumliche Koordinaten des herzustellenden Objekts bearbeitet werden, wobei das Verfahren (100) die folgenden Schritte aufweist:
- Ermitteln (102) ortsaufgelöster erster Prozessdaten von n Objekten, die während eines additiven Fertigungsprozesses zur Herstellung der n Objekte erfasst werden, wobei die ersten Prozessdaten für jedes der n Objekte ein Prozessdatenkoordinatensystem definieren,
- Ermitteln (104) von Messdaten der n Objekte durch bildgebende zerstörungsfreie Verfahren nach der Herstellung der n Objekte, wobei die Messdaten für jedes der n Objekte eine Objektdarstellung in einem Messdatenkoordinatensystem definieren, wobei das Ermitteln (104) von Messdaten der n Objekte durch eine computertomographische (CT) Messung erfolgt,
- Ermitteln (106), welche Koordinaten zumindest eines Teilbereichs des Messdatenkoordinatensystems Defektkoordinaten sind, die einem Defekt in der Objektdarstellung zugeordnet sind; wobei das Untersuchen (106) der Messdaten den Unterschritt aufweist: Segmentieren (122) von Defekten in den ermittelten Messdaten zum Identifizieren von Volumenelementen, die einen Defekt aufweisen,
- Korrelieren (108) des zumindest einen Teilbereichs des Messdatenkoordinatensystems umfassend die ermittelten Defektkoordinaten mit einem entsprechenden Teilbereich des Prozessdatenkoordinatensystems zum Sammeln von Trainingsdaten,
- Trainieren (110) eines lernfähigen Algorithmus zur Bestimmung von Defektkoordinaten in ortsaufgelösten Prozessdaten, die während eines additiven Fertigungsprozesses zur Herstellung eines Objekts erfasst wurden, mittels der Trainingsdaten,
- Ermitteln (112) ortsaufgelöster zweiter Prozessdaten, die während eines additiven Fertigungsprozesses zur Herstellung eines Objekts erfasst werden, und
- Analysieren (114) der zweiten Prozessdaten auf Defekte mittels des lernfähigen Algorithmus.

2. Verfahren nach Anspruch 1, **dadurch gekennzeichnet, dass** der Schritt Analysieren der zweiten Prozessdaten auf Defekte mittels des lernfähigen Algorithmus während des Ermittelns (112) der zweiten Prozessdaten durchgeführt wird.

3. Verfahren nach einem der vorhergehenden Ansprüche, **dadurch gekennzeichnet, dass** bei der Herstellung des Objekts jeweils für ein bei der Herstellung bearbeitetes Volumenelement oder eine räumliche Koordinate mindestens zwei unterschiedliche physikalische Messgrößen für die ortsaufgelösten ersten und zweiten Prozessdaten erfasst (116) werden.

4. Verfahren nach einem der vorhergehenden Ansprüche, **dadurch gekennzeichnet, dass** die ortsaufgelösten ersten und zweiten Prozessdaten Informationen darüber aufweisen, in welcher Reihenfolge Volumenelemente oder räumliche Koordinaten während der Herstellung bearbeitet werden.

5. Verfahren nach einem der vorhergehenden Ansprüche, **dadurch gekennzeichnet, dass** die zweiten Prozessdaten auf Deformationen in Form von Abweichungen der Oberflächengestalt zumindest eines Volumenelements von einer Soll-Geometrie des Objekts als Defekt untersucht (118) werden.

6. Verfahren nach einem der vorhergehenden Ansprüche, **dadurch gekennzeichnet, dass** die zweiten Prozessdaten auf offene oder geschlossene Hohlräume mit Einschluss von Rohmaterial oder Fluid als Defekt untersucht (120) werden.

7. Verfahren nach einem der vorhergehenden Ansprüche, **dadurch gekennzeichnet, dass** das Segmentieren (122) von Defekten in den ermittelten Messdaten in mindestens zwei Defektklassen durchgeführt wird, wobei im Schritt Korrelieren (108) die mindestens zwei Defektklassen mit den entsprechenden korrelierten Koordinaten des Prozessdatenkoordinatensystems verknüpft werden.

8. Verfahren nach Anspruch 7, **dadurch gekennzeichnet, dass** die mindestens zwei Defektklassen die Defektklassen Poren und/oder Einschlüsse von Fremdmaterial aufweisen.

9. Verfahren nach einem der vorhergehenden Ansprüche, **dadurch gekennzeichnet, dass** vor dem Korrelieren (108) das Prozessdatenkoordinatensystem und das Messdatenkoordinatensystem für jedes der n Objekte mittels einer elastischen, multi-modalen Registrierung registriert (124) werden.

10. Verfahren nach Anspruch 8 oder 9, **dadurch gekennzeichnet, dass** das Verfahren weiter folgende Schritte aufweist:
- Erfassen (126) von Defektpositionen in den ersten Prozessdaten,
- Identifizieren (128) von Defektpaaren aus Defektkoordinaten in den Messdaten und erfassten Defektpositionen in den ersten Prozessdaten, die mit einer Wahrscheinlichkeit oberhalb eines vordefinierten Wahrscheinlichkeits-Schwellenwertes einander zugeordnet sind,
- Registrieren (124) des Prozessdatenkoordinatensystems und des Messdatenkoordinatensystems auf Basis der identifizierten Defektpaare.

11. Verfahren nach Anspruch 10, **gekennzeichnet durch** Wiederholen (130) der Schritte Identifizieren (128) und Registrieren (124), wobei jede Wiederholung (130) des Schritts Identifizieren (128) auf Basis der unmittelbar vorher durchgeführten Registrierung durchgeführt wird, wobei die Wiederholung (130) der Schritte Identifizieren und Registrieren so lange durchgeführt wird, bis eine vordefinierte Abbruchbedingung erfüllt wird, wobei nach einem Abbruch die zuletzt durchgeführte Registrierung (124) für das Korrelieren (108) verwendet wird.

12. Verfahren nach Anspruch 11, **gekennzeichnet durch** Wiederholen (132) der Schritte:
- Erfassen (126) von Defektpositionen in den ersten Prozessdaten, wobei das Erfassen von Defektpositionen in den ersten Prozessdaten spätestens ab der ersten Wiederholung mittels des lernfähigen Algorithmus durchgeführt wird,
- Wiederholen (130) der Schritte nach Anspruch 11,
- Korrelieren (108) des zumindest einen Teilbereichs des Messdatenkoordinatensystems umfassend die ermittelten Defektkoordinaten der Objektdarstellung mit einem entsprechenden Teilbereich des Prozessdatenkoordinatensystems zum Sammeln von Trainingsdaten,
- Trainieren (110) des lernfähigen Algorithmus zur Bestimmung von Defektkoordinaten in ortsaufgelösten Prozessdaten, die während eines additiven Fertigungsprozesses zur Herstellung eines Objekts erfasst werden, mittels der Trainingsdaten,
wobei das Wiederholen der Schritte Erfassen (126), Wiederholen (130), Korrelieren (108) und Trainieren (110) so lange durchgeführt wird, bis eine weitere vordefinierte Abbruchbedingung erfüllt wird.

13. Computerprogrammprodukt mit auf einem Computer ausführbaren Instruktionen, welche auf einem Computer ausgeführt den Computer dazu veranlassen, das Verfahren nach einem der vorhergehenden Ansprüche durchzuführen.

## Claims

1. Computer-implemented method for the determination of defects of an object produced by means of an additive manufacturing process, wherein volume elements or spatial coordinates of the object to be produced are processed during the additive manufacturing process, wherein the method (100) has the following steps:
- determining (102) locally resolved first process data of n objects which are recorded during an additive manufacturing process for producing the n objects, the first process data defining a process data coordinate system for each of the n objects,
- determining (104) measurement data of the n objects by non-destructive imaging methods after the production of the n objects, the measurement data defining an object representation in a measurement data coordinate system for each of the n objects, wherein the determination (104) of measurement data of the n objects is carried out by a computed tomography (CT) measurement,
- determining (106) the coordinates of at least one subregion of the measurement data coordinate system which are defect coordinates, which are assigned to a defect in the object representation; wherein the examination (106) of the measurement data has the substep: segmentation (122) of defects in the measurement data determined in order to identify volume elements which have a defect,
- correlating (108) the at least one subregion of the measurement data coordinate system comprising the defect coordinates determined with a corresponding subregion of the process data coordinate system in order to collect training data,
- training (110) an adaptive algorithm for the determination of defect coordinates in locally resolved process data, which have been recorded during an additive manufacturing process for producing an object, by means of the training data,
- determining (112) locally resolved second process data which are recorded during an additive manufacturing process for producing an object, and
- analysing (114) the second process data in respect of defects by means of the adaptive algorithm.

2. Method according to Claim 1, **characterized in that** the step of analysing the second process data in respect of defects by means of the adaptive algorithm is carried out during the determination (112) of the second process data.

3. Method according to one of the preceding claims, **characterized in that**, during the production of the object, at least two different physical measurement quantities for the locally resolved first and second process data are respectively recorded (116) for a volume element being processed during the production or for a spatial coordinate.

4. Method according to one of the preceding claims, **characterized in that** the locally resolved first and second process data have information relating to the order in which volume elements or spatial coordinates are processed during the production.

5. Method according to one of the preceding claims, **characterized in that** the second process data are examined (118) in respect of deformations in the form of deviations of the surface configuration of at least one volume element from a setpoint geometry of the object as a defect.

6. Method according to one of the preceding claims, **characterized in that** the second process data are examined (120) in respect of open or closed cavities with inclusion of raw material or fluid as a defect.

7. Method according to one of the preceding claims, **characterized in that** the segmentation (122) of defects in the measurement data determined is carried out into at least two defect classes, the at least two defect classes being linked with the corresponding correlated coordinates of the process data coordinate system in the correlation step (108).

8. Method according to Claim 7, **characterized in that** the at least two defect classes have the defect classes of pores and/or inclusions of extraneous material.

9. Method according to one of the preceding claims, **characterized in that**, before the correlation (108), the process data coordinate system and the measurement data coordinate system are registered (124) for each of the n objects by means of an elastic multimodal registration.

10. Method according to Claim 8 or 9, **characterized in that** the method furthermore has the following steps:
- recording (126) defect positions in the first process data,
- identifying (128) defect pairs of defect coordinates in the measurement data and recorded defect positions in the first process data, which are assigned to one another with a probability above a predefined probability threshold value,
- registering (124) the process data coordinate system and the measurement data coordinate system on the basis of the defect pairs identified.

11. Method according to Claim 10, **characterized by** repetition (130) of the steps of identification (128) and registration (124), each repetition (130) of the identification step (128) being carried out on the basis of the registration carried out immediately before, the repetition (130) of the identification and registration steps being carried out until a predefined termination condition is satisfied, the registration (124) carried out last being used for the correlation (108) after a termination.

12. Method according to Claim 11, **characterized by** repetition (132) of the steps:
- recording (126) defect positions in the first process data, the recording of defect positions in the first process data being carried out at the latest starting with the first repetition by means of the adaptive algorithm,
- repeating (130) the steps according to Claim 11,
- correlating (108) the at least one subregion of the measurement data coordinate system comprising the determined defect coordinates of the object representation with a corresponding subregion of the process data coordinate system in order to collect training data,
- training (110) the adaptive algorithm in order to determine defect coordinates in locally resolved process data, which are recorded during an additive manufacturing process for producing an object, by means of the training data,
the repetition of the steps of recording (126), repetition (130), correlation (108) and training (110) being carried out until a further predefined termination condition is satisfied.

13. Computer program product having instructions that can be executed on a computer and when executed on a computer cause the computer to carry out the method according to one of the preceding claims.

## Revendications

1. Procédé mis en œuvre par ordinateur pour la détermination de défauts d'un objet fabriqué au moyen d'un processus de fabrication additif, des éléments de volume ou des coordonnées spatiales de l'objet à fabriquer étant traités pendant le processus de fabrication additif, le procédé (100) comportant les étapes suivantes :
- détermination (102) de premières données de processus résolues spatialement de n objets, qui sont acquises pendant un processus de fabrication additif pour la fabrication des n objets, les premières données de processus définissant un système de coordonnées de données de processus pour chacun des n objets,
- détermination (104) de données de mesure des n objets au moyen de procédés non destructifs d'imagerie après la fabrication des n objets, les données de mesure pour chacun des n objets définissant une représentation d'objet dans un système de coordonnées de données de mesure, la détermination (104) des données de mesure des n objets étant effectuée par une mesure de tomographie assistée par ordinateur (CT),
- détermination (106) des coordonnées d'au moins une zone partielle du système de coordonnées de données de mesure qui sont des coordonnées de défauts associées à un défaut dans la représentation d'objet ; l'examen (106) des données de mesure comprenant la sous-étape suivante : segmentation (122) des défauts dans les données de mesure déterminées pour identifier des éléments de volume qui présentent un défaut,
- corrélation (108) de ladite au moins une zone partielle du système de coordonnées de données de mesure comprenant les coordonnées de défauts déterminées avec une zone partielle correspondante du système de coordonnées de données de processus pour la collecte de données d'entraînement,
- entraînement (110) d'un algorithme adaptatif pour déterminer des coordonnées de défauts dans des données de processus résolues spatialement, qui ont été acquises pendant un processus de fabrication additif pour la fabrication d'un objet, au moyen des données d'entraînement,
- détermination (112) de deuxièmes données de processus résolues spatialement, qui sont acquises pendant un processus de fabrication additif pour la fabrication d'un objet, et
- analyse (114) des deuxièmes données de processus quant à la présence de défauts au moyen de l'algorithme adaptatif.

2. Procédé selon la revendication 1, **caractérisé en ce que** l'étape d'analyse des deuxièmes données de processus quant à la présence de défauts est effectuée au moyen de l'algorithme adaptatif pendant la détermination (112) des deuxièmes données de processus.

3. Procédé selon l'une des revendications précédentes, **caractérisé en ce que**, lors de la fabrication de l'objet, au moins deux grandeurs de mesure physiques différentes pour les premières et deuxièmes données de processus résolues spatialement sont respectivement acquises (116) pour un élément de volume traité lors de la fabrication ou pour une coordonnée spatiale.

4. Procédé selon l'une des revendications précédentes, **caractérisé en ce que** les premières et deuxièmes données de processus résolues spatialement comprennent des informations concernant la séquence suivant laquelle des éléments de volume ou des coordonnées spatiales sont traités pendant la fabrication.

5. Procédé selon l'une des revendications précédentes, **caractérisé en ce que** les deuxièmes données de processus sont examinées (118) quant à la présence de déformations sous forme d'écarts entre la configuration de surface d'au moins un élément de volume et une géométrie cible de l'objet en tant que défaut.

6. Procédé selon l'une des revendications précédentes, **caractérisé en ce que** les deuxièmes données de processus sont examinées (120) quant à la présence de cavités ouvertes ou fermées avec inclusion de matériau brut ou de fluide en tant que défaut.

7. Procédé selon l'une des revendications précédentes, **caractérisé en ce que** la segmentation (122) de défauts dans les données de mesure déterminées est effectuée dans au moins deux classes de défauts, lesdites au moins deux classes de défauts étant associées, lors de l'étape de corrélation (108), aux coordonnées corrélées correspondantes du système de coordonnées de données de processus.

8. Procédé selon la revendication 7, **caractérisé en ce que** lesdites au moins deux classes de défauts comprennent comme classes de défauts des pores et/ou des inclusions de matière étrangère.

9. Procédé selon l'une des revendications précédentes, **caractérisé en ce qu'**avant la corrélation (108), le système de coordonnées de données de processus et le système de coordonnées de données de mesure sont recalés (124) pour chacun des n objets au moyen d'un recalage élastique et multimodal.

10. Procédé selon l'une des revendications 8 ou 9, **caractérisé en ce que** le procédé comprend en outre les étapes suivantes :
- détection (126) de positions de défauts dans les premières données de processus,
- identification (128) de paires de défauts à partir de coordonnées de défauts dans les données de mesure et de positions de défauts détectées dans les premières données de processus, lesquelles paires de défauts sont associées les unes aux autres avec une probabilité supérieure à une valeur de seuil de probabilité prédéfinie,
- recalage (124) du système de coordonnées des données de processus et du système de coordonnées des données de mesure sur la base des paires de défauts identifiées.

11. Procédé selon la revendication 10, **caractérisé par** la répétition (130) des étapes d'identification (128) et de recalage (124), chaque répétition (130) de l'étape d'identification (128) étant effectuée sur la base du recalage effectué immédiatement avant, la répétition (130) des étapes d'identification et de recalage étant effectuée aussi longtemps que possible jusqu'à ce qu'une condition d'abandon prédéfinie soit satisfaite, le dernier recalage effectué (124) étant utilisé pour la corrélation (108) après un abandon.

12. Procédé selon la revendication 11, **caractérisé par** la répétition (132) des étapes suivantes :
- acquisition (126) de positions de défauts dans les premières données de processus, l'acquisition de positions de défauts dans les premières données de processus étant effectuée au plus tard à partir de la première répétition au moyen de l'algorithme adaptatif,
- répétition (130) des étapes selon la revendication 11,
- corrélation (108) de ladite au moins une zone partielle du système de coordonnées de données de mesure comprenant les coordonnées de défauts déterminées de la représentation d'objet avec une zone partielle correspondante du système de coordonnées de données de processus pour la collecte de données d'entraînement,
- entraînement (110) de l'algorithme adaptatif pour déterminer les coordonnées de défauts dans les données de processus résolues spatialement, qui sont acquises pendant un processus de fabrication additif pour la fabrication d'un objet, au moyen des données d'entraînement,
la répétition des étapes d'acquisition (126), de répétition (130), de corrélation (108) et d'entraînement (110) étant effectuée jusqu'à ce qu'une autre condition d'interruption prédéfinie soit satisfaite.

13. Produit de programme informatique comprenant des instructions exécutables sur un ordinateur qui, lorsqu'elles sont exécutées sur un ordinateur, amènent l'ordinateur à mettre en œuvre le procédé selon l'une des revendications précédentes.
